# EUROPEAN PATENT SPECIFICATION

(11) **EP 3 883 128 B1**
(45) Date of publication and mention of the grant of the patent: **19.07.2023**
(21) Application number: 21161847.5
(22) Date of filing: 10.03.2021
(51) Int. Cl.: H02S 20/32, F24S 30/425

(54) **SOLAR TRACKER WITH BLOCKING SYSTEM**
SOLARTRACKER MIT BLOCKIERSYSTEM
SUIVEUR SOLAIRE COMPRENANT UN SYSTÈME DE BLOCAGE

(30) Priority: 20.03.2020 ES 202030234
(43) Date of publication of application: 22.09.2021
(73) Proprietor: Esasolar Energy System, S.L., 28046 Madrid (ES)
(72) Inventor: MALDONADO FERREIRA, José Antonio, 28010 Madrid (ES)
(74) Representative: Tribalyte Ideas

(56) References cited:
- EP-A2- 2 072 933
- WO-A1-2016/179302
- US-A- 4 328 789
- US-A1- 2017 070 187
- US-A1- 2018 226 915
- US-A1- 2019 253 021

## Description

### FIELD OF THE INVENTION

The invention relates to photovoltaic installations, more specifically to movable structures or single-axis type solar trackers, configured for orienting groups of solar panels in the optimal direction for capturing the solar energy.

The invention relates particularly to a solar tracker according to the preamble of claim 1, which is known from WO 2016/179302 A1. The invention relates further to a method for operating the solar tracker.

### BACKGROUND OF THE INVENTION

In recent decades, the design and the improvement of renewable energy sources has gained significant importance in the area of sustainable development. Namely, photovoltaic solar energy is an efficient and cost-effective alternative for generating electrical energy of a renewable origin, obtained directly from solar radiation by means of semiconductor devices, commonly referred to as photovoltaic cells. Said cells are electrical mechanisms or devices which transform light energy into electrical energy. Therefore, photovoltaic cells are usually grouped together in the form of solar panels (also referred to as photovoltaic panels) which are formed by a group of cells producing electricity from the light striking them.

To optimize the amount of solar energy obtained in a photovoltaic installation, the amount of solar radiation received by the photovoltaic panel is sought to be increased, such that the effective generation rate of said installation is greater. To that end, it is necessary for the photovoltaic panel to remain in a position perpendicular to the light radiation of the sun, and to achieve this, there are known today solar trackers, which are mechanical devices capable of searching for the position of the sun at any time of day by means of search algorithms and moving the photovoltaic panel accordingly.

Solar trackers are devices formed by mechanical, electrical, and electronic systems which track the path of the sun capturing maximum solar radiation and are typically defined by a fixed part and a movable part. The fixed part is usually the electrical and electronic part for powering the system, whereas the movable part is the mechanical part, usually consisting of a motor which moves a mechanical assembly, which in turn orients the position of the shaft of the tracker, and the shaft orients the solar panel, respectively.

Namely, there are different types of trackers according to the freedom of movement they comprise or their tracking algorithm. There are solar trackers having one axis or two axes, according to the rotational movements they can carry out. The trackers having one axis follow the path of the sun in one of the azimuth or tilt angle, or polar angle, or with an oblique movement. Oblique tracking, or tracking on the polar axis, is performed with the rotating shaft oriented south and having a fixed tilt. On the other hand, in azimuth tracking rotation takes place about a vertically arranged axis and the angle coinciding with latitude. However, the most common tracking follows the sun from east to west throughout the day on the horizontal or tilt axis. This is done with the axis in the south-north direction and varying its tilt throughout the day.

Desirably, a solar tracker should be operating in photovoltaic power plants for over 30 years.

During that time, it must be able to withstand rain, snow, and strong winds on repeated occasions, and it must work properly in temperature ranges of -15 to 50°C. At the same time, it must be an autonomous machine requiring the minimum maintenance.

Heavy winds are the worst weather condition in relation to photovoltaic panel instability.

These winds are able to cause vibrations in solar panels, which jeopardize the system balance. The known solution to the problem of vibrations is based on dampeners or on blocking the photovoltaic panel. Blocking the panel is done in such a way that the photovoltaic panel is blocked in a horizontal position, i.e., parallel to the ground. This blocking system generates a rather inefficient system since it cannot be in a position perpendicular to sun rays, not all the energy is harnessed.

As an example of the solar trackers known in the art, patent application WO 2016/179302 A1 discloses a solar tracker comprising dampers as a torsional locking device. This device comprises, in turn, two dampers located one on each side of a support pile. As a result, the forces through each of the dampers will be smaller, allowing the cylinder design for the dampers to be of lower cost. The vertical component of the force will get canceled out, which can reduce the cost of other components. In a preferred embodiment of the locking device, the tracker utilizes a valve for closing both cylinders. Even though the proposed device reduces costs and increases reliability of the locking operations, it is unstable under weather-induced instabilities.

US 4,328,789 discloses a solar tracker with two reciprocating hydraulic pistons controlled by a hydraulic pump, wherein the chambers of the hydraulic pistons are connected to one another by means of a hose with the hydraulic pump being located in the resulting passage between the oil chambers thereof for forcing hydraulic fluid in the one or the other direction between said oil chambers via said hose.

Based on the foregoing, the object of the invention is an improved solar tracker which prevents weather-induced instabilities and improves solar tracker efficiency.

### BRIEF DESCRIPTION OF THE INVENTION

In light of the problems of the state of the art set forth in the previous section, an object of the present invention mainly relates to a single-axis solar tracker comprising a support with a rotating shaft perpendicular to the support, connected with at least one solar panel and a tracking system capable of operating the rotating shaft of the solar panel for moving it with respect to the movement of sun. More specifically, the invention relates to a solar tracker according to any of the claims herein.

The tracking system of the tracker preferably comprises a control subsystem and an operating subsystem which are capable of detecting the position of the solar panel and operating the rotating shaft of the solar panel for maximum optimization according to position of the sun and solar radiation. Movement of the solar panel is performed by means of a motor connected to the control subsystem by means of a cable. The control subsystem is in charge of sending the movement commands to the operating subsystem, i.e., to the motor, by means of sensors for detecting the position of the sun and a power source connected to the motor. In turn, the operating subsystem is the mechanical part of the solar tracker in charge of performing the movement of the solar tracker.

The solar tracker of the invention is likewise characterized in that it comprises a blocking system for blocking the rotating shaft of the tracker and a junction box connected to the tracking system. The blocking system is connected to the shaft and to the control subsystem of the tracking system and the junction box is connected to the control subsystem, to the operating subsystem, and to the blocking system, preferably by means of cables. The junction box is thereby located between the control subsystem, the blocking system, and the motor, with all the commands for the different elements passing through same.

In order to better understand the invention, it is necessary to describe the operation of the solar tracker. That is, when the control subsystem detects, by means of the sensors, that the solar tracker should move, it sends a command to the motor that is intercepted by the junction box, which programs that command (for example, immediately or on a delay) and commands the blocking system to be unblocked for allowing the rotation of the rotating shaft and the solar panel. Once it is unblocked, the motor receives the command to move and rotates the rotating shaft to the optimal position of the solar panel with respect to the position of the sun. Once the optimal position has been reached, the blocking system is blocked again.

The fact that the blocking system is blocked after each movement prevents the solar tracker from experiencing instability effects. Instability effects are due to harsh weather during the service life period of the tracker. As a result, the blocking system prevents effects such as vibrations, the effect of the wind, etc., regardless of the position that the solar panel is in, by increasing efficiency of the tracker since its optimal position with respect to the sun is not lost, harnessing maximum solar energy at all times.

Furthermore, as the effects of weather do not have such a strong effect on the solar tracker, savings in maintenance are achieved and the service life thereof is prolonged. Furthermore since more energy is generated, better annual production outlets, and therefore considerable savings are achieved.

Lastly, the invention is a quite versatile standard system because it can be adapted to any tracker already installed and in operation. It is merely necessary to implement a small electrical panel with the junction box from the power supply system and a blocking system on the rotating shaft of the tracker. It can thus be said that it is a system that is valid for most photovoltaic installations.

In the scope of the present invention, the expression "substantially" will be understood to mean identical or comprised in a range varying by ±15%.

### DESCRIPTION OF THE DRAWINGS

The aforementioned and other features and advantages will be fully understood from the detailed description of the invention, as well as from the preferred embodiments referring to the attached figures which are described in the following paragraphs.
Figure 1 shows an elevational view of a solar tracker in a first embodiment, which does not form part of the invention but is useful for understanding the invention.
Figure 2 shows an elevational view of the tracking system of the solar tracker in the first embodiment.
Figure 3 shows an elevational view of the blocking system of the solar tracker in the first embodiment.
Figure 4 shows a perspective view of the mechanical attachment of the hydraulic piston with the rotating shaft in the first embodiment.
Figure 5 shows a the preferred embodiment of the blocking system of the invention.

### Reference numbers used in the drawings:

| | |
|---|---|
| (1) | Solar tracker |
| (1a) | Support |
| (1b) | Rotating shaft |
| (1c) | Solar panel |
| (1d) | End support |
| (1e) | Socket joint |
| (2) | Tracking system |
| (2a) | Control subsystem |
| (2b) | Operating subsystem |
| (3) | Blocking system |
| (4) | Rocker arm |
| (5) | Motor |
| (6a, 6b, 6c) | Cables |
| (7) | Junction box |
| (8) | Hydraulic piston |
| (8a, 8b) | Ends of the hydraulic piston |
| (9) | Solenoid valve |
| (10) | Hose |
| (11) | Flat bar |
| (12) | Protrusion |

### DETAILED DESCRIPTION OF THE INVENTION

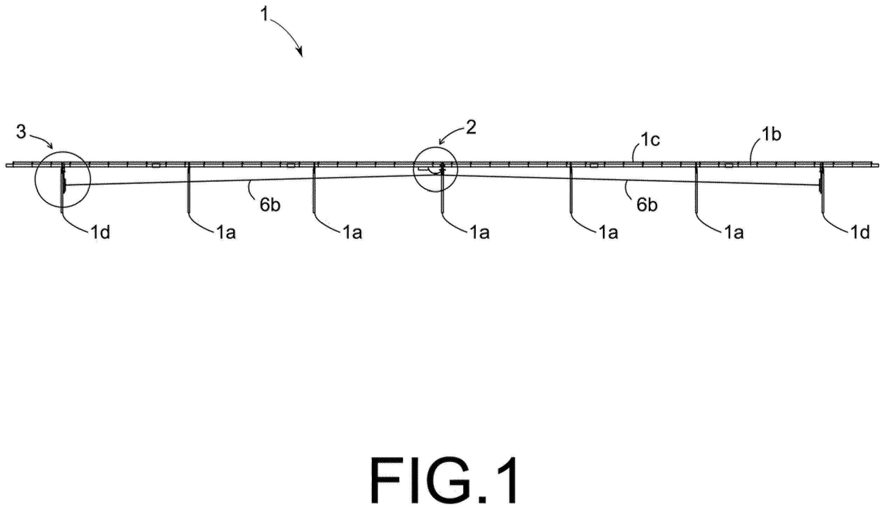

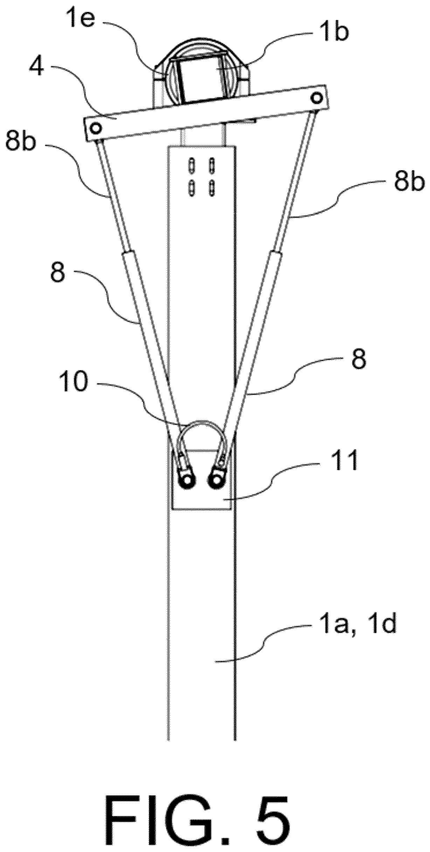

A detailed description of the invention in reference to the different embodiments thereof based on Figures 1-5 herein is set forth below, wherein the preferred embodiment of the invention is based on figure 5, whereas the other embodiment disclosed in figures 1 to 4 does not form part of the invention but is useful for understanding it.

Said description is provided for purpose of illustrating, though not limiting the claimed invention.

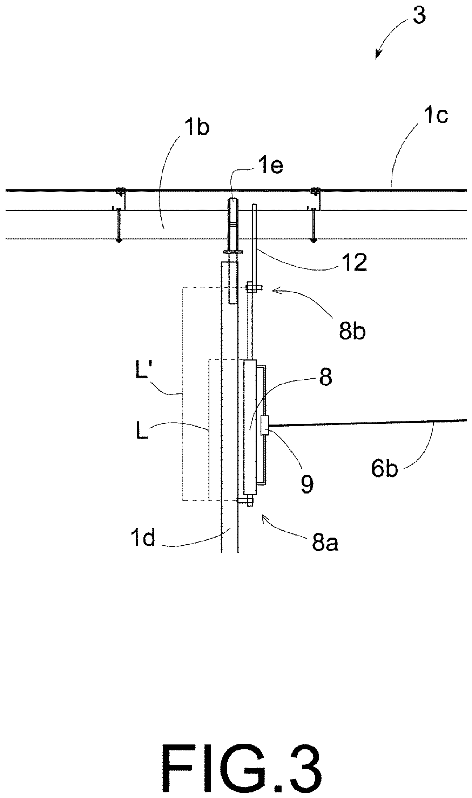

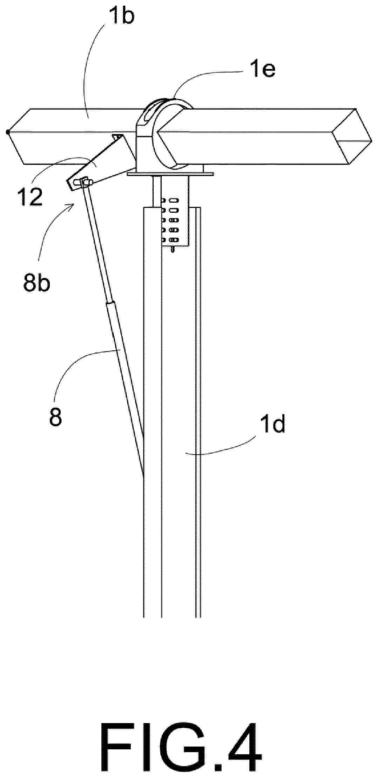

As described in the preceding sections, the invention preferably relates to a photovoltaic solar tracker (1) configured for capturing solar radiation by means of orienting said solar tracker (1) towards the position of the sun. As shown in Figure 1, the solar tracker (1) is supported on a preferably metallic structure comprising one or more supports (1a, 1d) that are fixed (for example, driven into, supported on, or cemented in the ground) and a longitudinal rotating shaft (1b) substantially perpendicular to the supports (1a). Likewise, one or more solar panels (1c) are fixed on said structure such that since the rotating shaft (1b) and the solar panel (1c) are attached to one another, when the rotating shaft (1b) rotates, the solar panel (1c) rotates as well. In the embodiment of Figures 1-5, the rotating shaft (1b) is preferably attached to the support (1a) by means of a ball and socket joint (1e) which can be observed in Figures 3 and 4. In a preferred embodiment of the solar tracker (1) of the invention, it further comprises a tracking system (2) for tracking the sun which is capable of operating the rotating shaft (1b) and the solar panel (1c) to make them rotate, being oriented towards the sun, in a programmed manner.

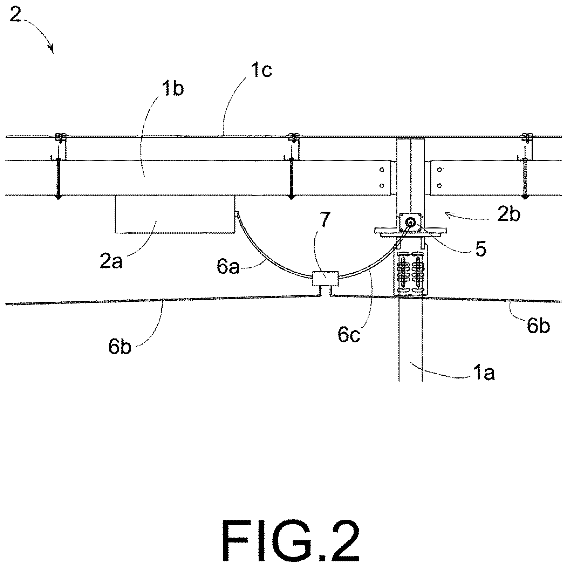

An embodiment of the tracking system (2) of the solar tracker (1) can be observed in Figure 2 in greater detail. The tracking system (2) mainly comprises a control subsystem (2a) and an operating subsystem (2b).

The control subsystem (2a) comprises at least one position sensor configured for measuring the position of the rotating shaft (1b) and/or of the solar panel (1c). In turn, the operating subsystem (2b) comprises a motor (5) configured for operating means for moving the rotating shaft (1b) and/or the solar panel (1c). The control subsystem (2a) and/or the operating subsystem (2b) preferably comprise a power source connected to the motor (5), for example by means of cables (6a, 6c). The sensors and the power source are not depicted in the figures.

The purpose of the position sensors is to detect whether the solar panel (1c) is in the optimal position with respect to the sun, preferably in a programmed manner, using optical detection means (for example, cameras, although these means are not essential in the invention) connected to a solar position tracking algorithm. Therefore, when the sensors detect that the solar panel (1c) is not in the correct position, the control subsystem (2a) commands the motor (5) to act so as to move the rotating shaft (1b) and the solar panels (1c) to the correct position, corresponding to the one that produces the greatest solar energy capture, i.e., the position in which the surface of the solar panel (1c) is perpendicular to the sun rays.

The solar tracker (1) of the invention is mainly characterized by comprising a blocking system (3) connected to the rotating shaft (1b), such that the orientation of the solar tracker (1) is blocked when the solar panels (1c) are located in optimal position with respect to the sun and the rotating shaft (1b) is in standby. Therefore, the solar tracker (1) is blocked after each movement sequence of the solar panel (1c) until its optimal position, such that the solar tracker (1) does not experience instability effects due to harsh weather or vibrations due to effects of the wind. Furthermore, this increases the efficiency of the solar tracker (1), since maximum solar energy is harnessed at all times.

In a preferred embodiment of the invention, the solar tracker (1) comprises a junction box (7), connected to the blocking system (3) and to the tracking system (2) (preferably to both the control subsystem (2a) and the operating subsystem (2b)), likewise comprising a microchip (or equivalent programmable computing means) programmed with a time sequence. Said microchip is therefore configured so that the commands sent by the control subsystem (2a) to the motor (5) are synchronized or coordinated with the position checks of the position sensors. Likewise, the junction box (7) can send unblocking commands to the blocking system (3) so that the rotating shaft (1b) can rotate when the command from the control subsystem (2a) to the motor (5) is executed.

The junction box (7) is preferably connected to the tracking system (2), to the motor (5), and to the blocking system (3) by means of the corresponding cables (6a, 6b, and 6c). In the embodiment of Figure 2, the junction box (7) is connected to the control subsystem (2a) by means of a first cable (6a), to the operating subsystem (2b) comprising the motor (5) by means of a second cable (6c), and to the blocking system (3) by means of a third cable (6b). The signals of the control subsystem (2a) therefore pass through the junction box (7) before reaching an intended element, being diverted to the motor (5) either immediately or a delay being generated in the initial signal, depending on the programming of said junction box (7).

Additionally, in the embodiment of Figures 1 and 3, the blocking system (3) is fixed to at least one end support (1d) of the solar tracker (1). However, in other preferred embodiments of the invention, the blocking system (3) can be fixed to any other of the supports (1a) (for example, it has been found that the supports (1a) next to the end support (1d) are also very energy efficient). Furthermore, the blocking system (3) is also connected to the rotating shaft (1b), since it is in charge of blocking or allowing the rotation of the rotating shaft (1b), and with it the solar panel (1c). At the same time, the blocking system (3) is connected to the junction box (7) by means of the cable (6b), wherein the junction box (7) is in charge of sending the blocking or unblocking signal to the blocking system (3) of the rotating shaft (1b).

Figure 3 shows an embodiment of the blocking system (3), where it can be observed that the blocking system (3) comprises a hydraulic piston (8) with a solenoid valve (9), wherein the hydraulic piston (8) comprises ends (8a, 8b). The hydraulic piston (8) is thereby fixed to the support (1d) at one end (8a) of the hydraulic piston (8) and is connected to the rotating shaft (1b) at the other end (8b) of the hydraulic piston (8). Namely, the preferred attachment of the end (8b) of the hydraulic piston (8) to the rotating shaft (1b) is performed by means of a flange-type mechanical part attaching the end (8b) of the hydraulic piston (8) preferably with a protrusion (12) fixed to the rotating shaft (1b), as shown in the embodiment of Figures 3 and 4.

Additionally, it can also be observed in Figure 3 that the solenoid valve (9) keeps the hydraulic piston (8) blocked and, with it, the rotating shaft (1b) when the solar panel (1c) is located in the optimal position with respect to the position of the sun. The hydraulic piston (8) therefore comprises a variable length (L) that can be extended or reduced as the rotating shaft (1b) rotates when the hydraulic piston (8) is unblocked. Likewise, after each movement of the rotating shaft (1b), the hydraulic piston (8) is preferably blocked again by the solenoid valve (9) with a fixed length (L'). After each movement, the solar tracker (1) is thereby blocked, i.e., protected against the aforementioned harsh weather.

Additionally, the solenoid valve (9) is connected to the hydraulic piston (8), such that when it receives the signal from the junction box (7), the solenoid valve (9) opens or closes, allowing the oil to flow through the hydraulic piston (8) and allowing the hydraulic piston (8) to be extended or reduced, varying the length (L) and allowing freedom of rotation of the rotating shaft (1b).

In a preferred embodiment of the invention, the junction box (7) additionally comprises a diode rectifier bridge, which ensures the maintenance of polarity in the blocking elements (for example, through the solenoid valve (9)), so that reverse currents can be controlled in the blocking system (3). The output of said rectifier bridge is preferably filtered by an inductor and a capacitor and, even more preferably, the entire circuit is protected by a resettable fuse, whose functionality can be programmed to reset after a period of time.

In those embodiments in which the motor (5) has low power or insufficient capacity, the derivation box (7) may further comprise an auxiliary battery, adapted to power the blocking system (3). Even more preferably in these embodiments, the junction box (7) can be equipped with a charge controller, for example of the MPPT ("Maximum power point tracking") or PWM ("Pulse width modulation") type by means of which current is received from a solar panel (1c) and the battery is recharged or maintained.

In different embodiments according to the previous examples, it is also possible to isolate the control stage and the power stage comprised in the circuit of the junction box (7) with insulating elements or assemblies selected from any of those known in the state of the art.

Likewise, in the preferred embodiment of the invention according to Figure 5, the blocking system (3) comprises two preferably reciprocating hydraulic pistons (8) (i.e., when the length of one increases, the length of the one decreases), and more preferably arranged in the form of a V, connected to a support (1a, 1d) at the lower portion thereof (for example, by means of a flat bar (11)) and to the rotating shaft (1b) at the upper portion thereof, for example being connected to said rotating shaft (1b) through a rocker arm (4) which allows transmitting the force of said hydraulic pistons (8) by angularly orienting the rotating shaft (1b) and blocking the position thereof under a given tilt angle.

In this same embodiment, the hydraulic pistons (8) are preferably connected by means of a hose (10) communicating the oil chambers thereof, therefore allowing the passage of oil from one piston (8) to another. The solenoid valve (9) is preferably arranged in this hose (10), and it will be in charge of allowing or retaining the passage of oil, such that when the valve (9) is closed (provided that electrical current does not reach it, for example if it is a normally closed valve (9)), the blocking system (3) will be in the blocked position, since the flow of oil from one hydraulic piston (8) to another is not allowed, therefore impeding the movement of the rods or ends (8b) inside the cylinders (8). Likewise, when the motor (5) of the solar tracker (1) starts to operate, the valve (9) opens, in turn opening the oil circuit between the hydraulic pistons (8).

In another preferred embodiment of the invention, the blocking system (3) has a safety subsystem in case the solenoid valve (9) fails and cannot open, or in case there is an electrical failure between the connection between the junction box (7) and the valve (9). Said safety subsystem preferably comprises a pressure-limiting valve, for example one that operates mechanically, the function of which is to allow the flow of oil between the hydraulic cylinders (8) when pressure therein increases, i.e., when the tracker (1) tries to move its position but the valve (9) has been closed for some reason.

Preferably, the operation of the solar tracker (1) in any of the embodiments herein described starts by reading the position sensors of the tracking system (2), which check the position of the tracker (1) every so often, wherein the sensors are preferably programmed with the check time desired by the operator. With each position check, if the sensors do not detect movement of the sun with respect to the position of the solar panel (1c), i.e., the solar panels (1c) are in the optimal position, the solar tracker (1) will be kept in standby and the hydraulic pistons (8) blocked. Conversely, if it is detected that the sun has moved, the position sensors send a signal to the control subsystem (2a) to start up movement of the rotating shaft (1b). The power source thereby sends a movement signal to the motor (5), which is also intercepted by the junction box (7). The junction box (7) thereby programs the movement signal of the motor (5) by means of the microchip (or equivalent computing means) and activates the opening of the solenoid valve (9), allowing the release of the hydraulic piston or pistons (8). After the unblocking of said hydraulic pistons (8), the movement signal ends and the junction box (7) commands the motor (5) to act in order to rotate the rotating shaft (1b). The rotating shaft (1b) can therefore rotate because the hydraulic pistons (8) are unblocked and can vary their length (L). The rotation of the rotating shaft (1b) therefore continues until the solar panel (1c) is oriented in its optimal position.

Finally, by means of position sensors the tracking system (2) determines that the solar panel (1c) is in the optimal position, and then the control subsystem (2a) cuts off power to the junction box (7) and the blocking system (3) is activated, i.e., the solenoid valve (9) closes, blocking the hydraulic pistons (8) with a fixed length (L'), preventing any type of movement of the rotating shaft (1b) and, therefore, of the solar tracker (1).

## Claims

1. Solar tracker (1) comprising:
- at least one support (1a, 1d) attached to a rotating shaft (1b), wherein at least one solar panel (1c) is arranged;
- a tracking system (2) equipped with a control subsystem (2a) and an operating subsystem (2b) of the rotating shaft (1b), wherein said tracking system (2) comprises at least one sensor for detecting the position of the rotating shaft (1b), one motor (5) for operating the rotating shaft (1b), and one power source for said motor (5);
- a blocking system (3) connected to the rotating shaft (1b);
- a junction box (7) connected to the tracking system (2), to the motor (5), and to the blocking system (3);
wherein the blocking system (3) comprises:
- two reciprocating hydraulic pistons (8), arranged in the form of a V and controlled by a solenoid valve (9), said hydraulic pistons (8) being connected to a support (1a, 1d) at the lower portion thereof, and to the rotating shaft (1b) at the upper portion thereof, such that the extension of said hydraulic pistons (8) configures the angular blocking position of the rotating shaft (1b);
and **characterized in that**
- the hydraulic pistons (8) are connected to one another by means of a hose (10) communicating the oil chambers thereof, therefore allowing the passage of oil from one piston (8) to another; and
- the hose (10) is connected to the solenoid valve (9), such that it allows or retains the passage of oil from one piston (8) to another for keeping the movements of the hydraulic pistons (8) unblocked or blocked, respectively.

2. Solar tracker (1) according to the preceding claim, wherein the two reciprocating hydraulic pistons (8) are connected to the rotating shaft (1b) through a rocker arm (4).

3. Solar tracker according to any of the preceding claims, wherein the blocking system (3) comprises a safety subsystem equipped with a pressure-limiting valve, configured for allowing the flow of oil between the hydraulic cylinders (8) when pressure therein increases.

4. Solar tracker (1) according to any of the preceding claims, wherein at least one hydraulic piston (8) comprises a length (L') when the blocking system (3) is unblocked and the end (8b) moves away from the other end (8a) when the rotating shaft (1b) rotates.

5. Solar tracker (1) according to any of the preceding claims, wherein the blocking system (3) is unblocked by the junction box (7) by means of the opening of the solenoid valve (9) when the control subsystem (2a) of the tracking system (2) emits a command for the motor (5) to move in order to perform the correct positioning of the solar panels (1c) by means of the rotation of the rotating shaft (1b).

6. Solar tracker (1) according to any of the preceding claims, wherein the junction box (7) comprises a microchip programmed with a time sequence.

7. - Solar tracker (1) according to any of the preceding claims, wherein the junction box (7) comprises a diode rectifier bridge and, additionally, a filtering inductor and a filtering capacitor arranged at the output of said rectifier bridge.

8. - Solar tracker (1) according to any of the preceding claims, wherein the junction box (7) comprises an auxiliary battery adapted to power the blocking system (3) and, optionally, a charge controller adapted to receiving current from a solar panel (1c), and to recharging or maintaining the charge of said auxiliary battery during the operation of the solar tracker (1).

9. Solar tracker (1) according to any of the preceding claims, wherein at least one hydraulic piston (8) comprises a variable length (L) between ends (8a, 8b).

10. Solar tracker (1) according to any of the preceding claims, wherein the blocking system (3) is fixed to the end supports (1d) at the end (8a) of at least one hydraulic piston (8) and to the rotating shaft (1b) by means of a protrusion (12) at the end (8b) of said hydraulic piston (8).

11. Method of blocking a solar tracker (1) according to any of the preceding claims, wherein said method comprises operating the blocking system (3) for blocking the signal from the junction box (7) by closing of the solenoid valve (9) when the solar panel (1c) is in a given orientation and the motor (5) is stopped.

12. Method according to the preceding claim, wherein the orientation of the solar panel (1c) is such that the plane formed by said solar panel (1c) is substantially perpendicular to the path of incidence of the solar rays thereon.

## Patentansprüche

1. Solartracker (1), Folgendes umfassend:
- mindestens einen Träger (1a, 1d), der an einer Drehwelle (1b) befestigt ist, wobei mindestens ein Solarpanel (1c) angeordnet ist;
- ein Nachführsystem (2), das mit einem Kontrolluntersystem (2a) und einem Betriebuntersystem (2b) der Drehwelle (1b) ausgestattet ist, wobei das Nachführsystem (2) mindestens einen Sensor zum Erkennen der Position der Drehwelle (1b), einen Motor (5) zum Betrieb der Drehwelle (1b) und eine Stromquelle für den Motor (5) umfasst;
- ein Blockiersystem (3), das mit der Drehwelle (1b) verbunden ist;
- eine Anschlussdose (7), die mit dem Nachführsystem (2), dem Motor (5) und dem Blockiersystem (3) verbunden ist;
wobei das Blockiersystem (3) Folgendes umfasst:
- zwei hin- und hergehende Hydraulikkolben (8), die in Form eines V angeordnet sind und durch ein Magnetventil (9) gesteuert werden, wobei die Hydraulikkolben (8) mit einem Träger (1a, 1d) an dem untere Teil davon und mit der Drehwelle (1b) an dem oberen Teil davon verbunden sind, so dass die Ausdehnung der Hydraulikkolben (8) die winkelmäßige Blockierposition der Drehwelle (1b) ausbildet;
und **dadurch gekennzeichnet, dass**
- die Hydraulikkolben (8) durch einen Schlauch (10) miteinander verbunden sind, der ihre Ölkammern miteinander verbindet, wobei somit der Durchgang von Öl von einem Kolben (8) zum anderen ermöglicht wird; und
- der Schlauch (10) mit dem Magnetventil (9) verbunden ist, so dass er den Durchgang von Öl von einem Kolben (8) zu einem anderen ermöglicht oder zurückhält, um die Bewegungen der Hydraulikkolben (8) jeweils freizugeben oder zu blockieren.

2. Solartracker (1) nach dem vorhergehenden Anspruch, wobei die beiden hin- und hergehenden Hydraulikkolben (8) über einen Kipphebel (4) mit der Drehwelle (1b) verbunden sind.

3. Solartracker nach einem der vorhergehenden Ansprüche, wobei das Blockiersystem (3) ein Sicherheitsuntersystem umfasst, das mit einem Druckbegrenzungsventil ausgestattet ist, das so ausgebildet ist, dass es den Ölfluss zwischen den Hydraulikzylindern (8) zulässt, wenn der Druck in diesen ansteigt.

4. Solartracker (1) nach einem der vorhergehenden Ansprüche, wobei mindestens ein Hydraulikkolben (8) eine Länge (L') umfasst, wenn das Blockiersystem (3) freigegeben wird und sich das Ende (8b) vom anderen Ende (8a) wegbewegt, wenn sich die Drehwelle (1b) dreht.

5. Solartracker (1) nach einem der vorhergehenden Ansprüche, wobei das Blockiersystem (3) durch die Anschlussdose (7) mittels der Öffnung des Magnetventils (9) freigegeben wird, wenn das Kontrolluntersystem (2a) des Nachführsystems (2) einen Bewegungsbefehl für den Motor (5) emittiert, um die korrekte Positionierung der Solarpaneele (1c) mittels der Drehung der Drehwelle (1b) durchzuführen.

6. Solartracker (1) nach einem der vorhergehenden Ansprüche, wobei die Anschlussdose (7) einen Mikrochip umfasst, der mit einer Zeitsequenz programmiert ist.

7. Solartracker (1) nach einem der vorhergehenden Ansprüche, wobei die Anschlussdose (7) eine Diodengleichrichterbrücke und zusätzlich eine Filterinduktivität und einen Filterkondensator umfasst, die am Ausgang der Gleichrichterbrücke angeordnet sind.

8. Solartracker (1) nach einem der vorhergehenden Ansprüche, wobei die Anschlussdose (7) eine Hilfsbatterie umfasst, die angepasst ist, um das Blockiersystem (3) mit Strom zu versorgen, und gegebenenfalls einen Laderegler, der angepasst ist, um Strom von einem Solarpanel (1c) zu empfangen und die Ladung der Hilfsbatterie während des Betriebs des Solartrackers (1) wieder aufzuladen oder aufrechtzuerhalten.

9. Solartracker (1) nach einem der vorhergehenden Ansprüche, wobei mindestens ein Hydraulikkolben (8) eine variable Länge (L) zwischen den Enden (8a, 8b) umfasst.

10. Solartracker (1) nach einem der vorhergehenden Ansprüche, wobei das Blockiersystem (3) an den Endträgern (1d) am Ende (8a) mindestens eines Hydraulikkolbens (8) und an der Drehwelle (1b) mittels eines Vorsprungs (12) am Ende (8b) des Hydraulikkolbens (8) befestigt ist.

11. Verfahren zum Blockieren eines Solartrackers (1) nach einem der vorhergehenden Ansprüche, wobei das Verfahren den Betrieb des Blockiersystems (3) zum Blockieren des Signals von der Anschlussdose (7) durch Schließen des Magnetventils (9) umfasst, wenn sich das Solarpanel (1c) in einer bestimmten Ausrichtung befindet und der Motor (5) angehalten wird.

12. Verfahren nach dem vorhergehenden Anspruch, wobei die Ausrichtung des Solarpanels (1c) derart ist, dass die von dem Solarpanel (1c) gebildete Ebene im Wesentlichen senkrecht zum Einfallsweg der darauf einfallenden Sonnenstrahlen ist.

## Revendications

1. Suiveur solaire (1) comprenant :
- au moins un support (1a, 1d) fixé à un arbre rotatif (1b), dans lequel est disposé au moins un panneau solaire (1c) ;
- un système de suivi (2) équipé d'un sous-système de contrôle (2a) et d'un sous-système de fonctionnement (2b) de l'arbre rotatif (1b), dans lequel ledit système de suivi (2) comprend au moins un capteur pour détecter la position de l'arbre rotatif (1b), un moteur (5) pour faire fonctionner l'arbre rotatif (1b), et une source d'énergie pour ledit moteur (5) ;
- un système de blocage (3) connecté à l'arbre rotatif (1b) ;
- une boîte de jonction (7) reliée au système de suivi (2), au moteur (5) et au système de blocage (3) ;
dans lequel le système de blocage (3) comprend :
- deux pistons hydrauliques alternatifs (8), disposés en forme de V et commandés par une électrovanne (9), lesdits pistons hydrauliques (8) étant reliés à un support (1a, 1d) dans leur partie inférieure, et à l'arbre rotatif (1b) dans leur partie supérieure, de sorte que l'extension desdits pistons hydrauliques (8) configure la position de blocage angulaire de l'arbre rotatif (1b) ;
et **caractérisé en ce que**
- les pistons hydrauliques (8) sont reliés entre eux par un tuyau (10) communiquant avec leurs chambres à huile, ce qui permet le passage de l'huile d'un piston (8) à l'autre ; et
- le tuyau (10) est relié à l'électrovanne (9), de sorte qu'il permet ou retient le passage de l'huile d'un piston (8) à l'autre pour maintenir les mouvements des pistons hydrauliques (8) débloqués ou bloqués, respectivement.

2. Suiveur solaire (1) selon la revendication précédente, dans lequel les deux pistons hydrauliques alternatifs (8) sont reliés à l'arbre rotatif (1b) par l'intermédiaire d'un balancier (4).

3. Suiveur solaire selon l'une quelconque des revendications précédentes, dans lequel le système de blocage (3) comprend un sous-système de sécurité équipé d'une soupape de limitation de pression, configurée pour permettre l'écoulement de l'huile entre les cylindres hydrauliques (8) lorsque la pression augmente à l'intérieur de ceux-ci.

4. Suiveur solaire (1) selon l'une quelconque des revendications précédentes, dans lequel au moins un piston hydraulique (8) présente une longueur (L') lorsque le système de blocage (3) est débloqué et que l'extrémité (8b) s'éloigne de l'autre extrémité (8a) lorsque l'arbre rotatif (1b) tourne.

5. Suiveur solaire (1) selon l'une quelconque des revendications précédentes, dans lequel le système de blocage (3) est débloqué par la boîte de jonction (7) grâce à l'ouverture de l'électrovanne (9) lorsque le sous-système de commande (2a) du système de suivi (2) émet un ordre de déplacement du moteur (5) afin d'effectuer le positionnement correct des panneaux solaires (1c) grâce à la rotation de l'arbre rotatif (1b).

6. Suiveur solaire (1) selon l'une des revendications précédentes, dans lequel la boîte de jonction (7) comprend une puce électronique programmée avec une séquence de temps.

7. Suiveur solaire (1) selon l'une quelconque des revendications précédentes, dans lequel la boîte de jonction (7) comprend un pont redresseur à diodes et, en outre, une inductance de filtrage et un condensateur de filtrage disposés à la sortie dudit pont redresseur.

8. Suiveur solaire (1) selon l'une quelconque des revendications précédentes, dans lequel la boîte de jonction (7) comprend une batterie auxiliaire adaptée pour alimenter le système de blocage (3) et, éventuellement, un contrôleur de charge adapté pour recevoir le courant d'un panneau solaire (1c), et pour recharger ou maintenir la charge de ladite batterie auxiliaire pendant le fonctionnement du suiveur solaire (1).

9. Suiveur solaire (1) selon l'une quelconque des revendications précédentes, dans lequel au moins un piston hydraulique (8) comprend une longueur variable (L) entre les extrémités (8a, 8b).

10. Suiveur solaire (1) selon l'une quelconque des revendications précédentes, dans lequel le système de blocage (3) est fixé aux supports d'extrémité (1d) à l'extrémité (8a) d'au moins un piston hydraulique (8) et à l'arbre rotatif (1 b) au moyen d'une saillie (12) à l'extrémité (8b) dudit piston hydraulique (8).

11. Procédé de blocage d'un suiveur solaire (1) selon l'une quelconque des revendications précédentes, dans lequel ledit procédé consiste à faire fonctionner le système de blocage (3) pour bloquer le signal provenant de la boîte de jonction (7) en fermant l'électrovanne (9) lorsque le panneau solaire (1c) est dans une orientation donnée et que le moteur (5) est arrêté.

12. Procédé selon la revendication précédente, dans lequel l'orientation du panneau solaire (1c) est telle que le plan formé par ledit panneau solaire (1c) est sensiblement perpendiculaire à la trajectoire d'incidence des rayons solaires sur celui-ci.
